# EUROPÄISCHE PATENTSCHRIFT

(11) **EP 4 177 420 B1**
(45) Veröffentlichungstag und Bekanntmachung des Hinweises auf die Patenterteilung: **31.12.2025**
(21) Anmeldenummer: 22205748.1
(22) Anmeldetag: 07.11.2022
(51) Int. Cl.: E04G 21/24, E04G 21/28, F03D 13/10, F03D 13/40, F03D 80/00

(54) **ABDECKVORRICHTUNG**
COVERING DEVICE
DISPOSITIF DE RECOUVREMENT

(30) Priorität: 08.11.2021 DE 202021003442 U
(43) Veröffentlichungstag der Anmeldung: 10.05.2023
(73) Patentinhaber: Jensen, Christin, 24991 Großsolt (DE)
(72) Erfinder: Jensen, Christin, 24991 Großsolt (DE)
(74) Vertreter: Philipp, Matthias

(56) Entgegenhaltungen:
- WO-A1-2015/039777
- WO-A1-2021/104587
- CN-A- 108 386 327
- DE-U1- 202014 000 072

## Beschreibung

Die Erfindung betrifft eine Abdeckvorrichtung, insbesondere für Bausegmente von Windkraftanlagen.

Bei Windenergieanlagen werden Türme aus mehreren Turmsegmenten am Standort der Windenergieanlage zusammengebaut. Dazu müssen die Turmsegmente zum Aufstellort transportiert werden und dort aufeinander gesetzt werden. Auf das oberste Turmsegment wird eine Gondel aufgesetzt.

Solche Türme sind meistens Stahltürme oder Hybridtürme aus Stahl- und Betonsegmenten, können jedoch auch aus anderen Materialien, zum Beispiel Kunststoffverbundwerkstoffen bestehen. Die Turmsegmente sind jeweils hohl, sodass in dem fertigen Turm ein innenliegender Wartungsaufgang entsteht und das Gewicht reduziert wird. Im Inneren des Turmes sind Zwischenebenen angeordnet, die als Arbeitsplattformen dienen. Bevorzugt sind die Arbeitsplattformen jeweils an den oberen Enden der Turmsegmente vorgesehen.

Um die Turmsegmente miteinander zu verbinden, weisen die Turmsegmente an ihrem oberen Ende einen Montageflansch mit Montagelöchern auf. Ein weiteres Turmsegment oder eine Gondel kann dann mittels Bolzen, die in die Montagelöcher eingreifen, aufgesetzt und befestigt werden.

Da die Montage der Türme am Aufstellort geschieht, sind die Turmsegmente beim Transport und der Montage der Witterung ausgesetzt. Die offenen Enden der Türme stellen Windfänger da. Somit stellen starke Winde bei der Montage oder dem Transport ein Sicherheitsrisiko da. Ferner ist das Innere der Türme vor Feuchtigkeit und Regen zu schützen, und die Arbeitsbedingungen der Arbeiter und deren Sicherheit bei der Montage ist zu gewährleisten.

Dazu sind aus dem Stand der Technik Abdeckplanen bekannt, die über die Enden der Turmsegmente gespannt werden, um diese vor Witterungseinflüssen zu schützen und den Windwiderstand zu reduzieren. Dazu werden die Abdeckplanen an dem Flansch des Turmsegments befestigt.

Nachteilig an diesen bekannten Abdeckplanen ist, dass sie lediglich auf dem Montageflansch, der eben mit einer stirnseitigen Fläche des Turmsegments abschließen kann, befestigt werden. Starker Wind kann unter die Planen greifen. Im schlimmsten Fall wird so das Problem des Windwiderstandes noch vergrößert, oder die Abdeckung wird abgerissen. Ein Beispiel aus dem Stand der Technik ist in WO2021/104587A1 offenbart.

Aufgabe der vorliegenden Erfindung ist es somit, eine Abdeckvorrichtung bereitzustellen, die die Probleme aus dem Stand der Technik überwindet, insbesondere die Sicherheit beim Aufstellen und Montieren von Türmen aus mehreren Turmsegmenten erhöht. Auch andere Öffnungen von Windenergieanlagen, zum Beispiel an Bausegmenten, oder Nabenöffnungen, Blatteinführungen an Gondeln etc. sollen abdeckbar sein.

Die beschriebene Aufgabe wird durch eine Abdeckvorrichtung nach Anspruch 1 gelöst.

Eine erfindungsgemäße Abdeckvorrichtung dient zum Abdecken insbesondere einer stirnseitigen Öffnung eines Bausegments, insbesondere eines rohrförmigen Turmsegments, welches eine Wand, insbesondere eine Turmwand, mit einer außenliegenden Mantelfläche und einen entlang der Öffnung verlaufenden Montageflansch mit einer Mehrzahl von Montagelöchern umfasst. Der Montageflansch kann an einer stirnseitigen Öffnung eines Bausegments angeordnet sein, welches eine die Mantelfläche bildende Außenfläche aufweist. Das Bausegment kann ein Turm einer Windenergieanlage sein. Die Montagefläche kann eine Außenfläche des Montageflanschs sein. Die Abdeckvorrichtung weist eine Abdeckplane, die auf die Öffnung und eine Oberseite des Montageflansches auflegbar ist und mit der die Öffnung abdeckbar ist, eine Mehrzahl von Befestigungsschlingen, die umlaufend an der Abdeckplane angeordnet sind, um jeweils durch eines der Montagelöcher führbar zu sein und auf einer der Abdeckplane gegenüberliegenden Unterseite des Montageflansches durch ein Hindurchführen jeweils eines Schlingenendes durch jeweils eine angrenzende Befestigungsschlinge zu einer Kette verbindbar zu sein, und eine radial außerhalb der Montagelöcher angeordnete, sich an die Abdeckplane anschließende, umlaufende Schürze, die an eine den Montageflansch umgebende äußere Mantelfläche anlegbar sein kann, auf.

Die Schürze liegt in einem montierten Zustand an einer äußeren Mantelfläche an. Der Montageflansch bzw. das Bausegment und die Abdeckvorrichtung überlappen sich somit in einer axialen Richtung des Bausegments. Dies verhindert ein Untergreifen der Abdeckvorrichtung durch den Wind. Die Schürze erstreckt sich dabei also bei einem Bausegment von einem in der radialen Richtung außenliegenden Ende der Abdeckplane entlang der axialen Richtung des Bausegments, vertikal nach unten.

Um das Risiko, dass Wind die Abdeckvorrichtung untergreift oder Feuchtigkeit, zum Beispiel Regen, eindringt zu reduzieren, ist es vorteilhaft, wenn die Schürze eng an der Mantelfläche anliegt oder sogar an diese angepresst wird. Die Schürze kann dazu mit einem Durchmesser ausgelegt sein, der nur geringfügig größer oder genauso groß ist wie/als der Durchmesser des Bausegments ist. Eine solche Ausführungsform lässt sich allerdings schlecht auf das Bausegment aufschieben.

Erfindungsgemäß umfasst die Abdeckvorrichtung einen Spanngurt, welcher mit der Schürze zum Spannen der Schürze gegen die Mantelfläche zusammenwirkt. Dabei ist der Spanngurt bevorzugt in einer Umfangsrichtung beweglich an der Schürze gehalten.

Der Spanngurt kann ein umlaufender Gurt sein, der in einer Aufnahmetasche der Schürze gehalten ist.

Die Schürze kann an einem von der Abdeckplane abgewandten Ende umgeschlagen sein, um die Aufnahmetasche für den Spanngurt zu bilden. Alternativ können Laschen oder Ähnliches an der Schürze vorgesehen sein, um den Spanngurt aufzunehmen und zu führen.

Um ein Verrutschen der Schürze zu verhindern, kann die Kontaktfläche zwischen Schürze und Bausegment einen hohen Reibungskoeffizienten aufweisen. Dazu kann zum Beispiel eine Gummierung auf einer der Mantelfläche zugewandten Seite der Schürze vorgesehen sein. Die Gummierung kann zum Beispiel ein umlaufender Ring sein, der auf die Schürze aufgenäht, - geschweißt oder -geklebt sein kann. Alternativ kann auch die gesamte Schürze aus einem Material gefertigt sein, das gegenüber der Mantelfläche bzw. dem Bausegment einen hohen Reibungskoeffizienten aufweist, es kann eine Beschichtung aufgebracht sein oder andere Materialringe, -streifen oder -abschnitte an der Schürze befestigt sein, um den Reibungskoeffizienten zu erhöhen.

Wird die Schürze von einem Spanngurt an die Mantelfläche gedrückt, ist es vorteilhaft den erhöhten Reibungskoeffizienten zumindest in dem Bereich vorzusehen, in dem der Spanngurt die Schürze andrückt.

Ferner kann der Spanngurt in Umfangsrichtung mehrere separate Gurtabschnitte umfassen, wobei zwei aneinandergrenzende Gurtabschnitte jeweils über ein Spannelement verbunden sein können.

Als Spannelement kann zum Beispiel eine Ratsche dienen. Die Schürze kann in einem Bereich, in dem ein Spannelement vorgesehen ist, eine Aussparung aufweisen. Die Aussparung kann sich in Richtung des von der Abdeckplane abgewandten Endes verbreitern. Ist eine solche Aussparung vorgesehen, kann diese mit einem Hinterlegungsmaterial hinterlegt sein, um ein Eindringen von Regen und Wind durch die Aussparung zu verhindern. Das Hinterlegungsmaterial kann dünner sein als die eigentliche Schürze, sodass es sich leicht falten kann. Auch kann in dem Fall, dass der Spanngurt in der durch ein Umfalten der Schürze erzeugten Aufnahmetasche gehalten ist, die äußere Seite der Aufnahmetasche im Bereich der Spannelemente ausgespart sein und der innere Bereich der Aufnahmetasche durchgehend ausgeführt sein. So ist das Spannelement von außen erreichbar und die Mantelfläche wird vor Beschädigungen durch das Spannelement geschützt. Zum Schutz der Mantelfläche kann im Bereich der Spannelemente auch eine zusätzliche Schutzmatte zwischen Spannelement und Mantelfläche an der Schürze befestigt sein.

Bevorzugt sind mindestens zwei, drei, vier oder fünf Spannelemente über den Umfang der Mantelfläche verteilt.

In der Abdeckplane kann eine verschließbare Arbeitsöffnung vorgesehen sein, um einem Arbeiter zu ermöglichen, durch die Arbeitsöffnung Arbeiten auf einer Außenseite der Abdeckvorrichtung und/oder einer Außenseite des Bausegments vorzunehmen, zum Beispiel den Spanngurt festzuziehen oder zu lösen, während er sich auf der Arbeitsplattform des Bausegments befindet.

Die Arbeitsöffnungen ermöglichen es einem Arbeiter zum Beispiel den Spanngurt einfach zu spannen, während er auf einer Arbeitsplattform in dem Bausegment steht. Bevorzugt ist eine Arbeitsöffnung je Spannelement vorgesehen.

Die Abdeckvorrichtung kann ferner zumindest ein Stützelement aufweisen, das zwischen dem Montageflansch bzw. dem Bausegment und mindestens einem Auflagepunkt der Abdeckplane verspannbar ist, um die Abdeckplane aus einer von einer stirnseitigen Fläche des Bausegments aufgespannten Ebene bzw. einer Ebene des Montageflanschs heraus von dem Montageflansch bzw. Bausegment nach oben weg zu spannen und so mindestens einen Hochpunkt der Abdeckplane zu erzeugen.

Die Abdeckplane kann aus mehreren Planensegmenten gefertigt sein. Dabei kann jedes der Planensegmente im Wesentlichen die Form eines Kreissektors, bspw. sich über 60° erstreckend, so dass sechs Segmente eine runde Plane ergeben, oder eines gleichschenkligen Dreiecks aufweisen. Zwei gleichlange oder radial verlaufende Seitenkanten jedes der Planensegmente können so geformt sein, dass eine Umfangsreduzierung von Abschnitten der Abdeckplane aufgrund des Hochpunktes beziehungsweise einer bei einem Spannen mittels des Stützelements erzeugten Erhebung ausgeglichen wird und ein Faltenwurf der Abdeckplane verhindert wird. Zumindest sind die Planensegmente so ausgebildet, dass die Abdeckplane in ihrem montierten dreidimensionalen Zustand, zum Beispiel als Pyramide, Firstzelt oder mehrspitziges Zelt keine oder möglichst wenig Falten wirft.

Der Anlagepunkt der Abdeckplane kann ein verstärkter Bereich der Abdeckplane sein.

Das zumindest eine Stützelement kann in seiner Länge veränderbar sein, insbesondere teleskopartig verlängerbar sein.

Die Abdeckplane kann Verstärkungen aufweisen, um eine durch das Stützelement in die Abdeckplane eingebrachte Spannung von dem Anlagepunkt zu den Befestigungsschlingen zu leiten.

Die Verstärkungen können den verstärkten Bereich des Anlagepunktes, einen umlaufenden Verstärkungsstreifen entlang der Befestigungsschlingen und, insbesondere in radialer Richtung verlaufende, Verstärkungsstreifen zwischen dem verstärkten Bereich des Anlagepunktes und dem umlaufenden Verstärkungsstreifen umfassen.

Die Abdeckplane kann eine Hauptplane zum Abdecken der Öffnung und für die Befestigung der Befestigungsschlingen und einen Abdeckstreifen umfassen, der in der radialen Richtung innerhalb der Befestigungsschlingen an der Hauptplane umlaufend befestigt ist. Der Abdeckstreifen kann sich dabei in dem montierten Zustand auf einer von dem Bausegment bzw. Montageflansch abgewandten Seite über die Befestigungsschlingen bis zu der Schürze erstrecken.

Die Abdeckvorrichtung kann ferner eine Mehrzahl von Stützelementen aufweisen. Dabei kann die Abdeckplane eine gleiche Mehrzahl an Auflagepunkten aufweisen, so dass in dem montierten Zustand der Abdeckvorrichtung eine entsprechende Mehrzahl an Hochpunkten herstellbar ist.

Die Befestigungsschlingen können auf einer dem Montageflansch bzw. Bausegment oder Turmsegment zu- oder abgewandten Seite (Innen- oder Außenseite) der Abdeckplane bzw. der Hauptplane befestigt, z.B. vernäht, verschweißt, verklebt oder verschraubt sein. In jedem Fall sollte für jede Schlinge ein Gegenlager zur Lastaufnahme vorhanden sein. Die Abdeckplane beziehungsweise die Hauptplane kann Durchführungsöffnungen in Form von Schlitzen, Öffnungen, Ringen, Ösen oder Bügelkrampen aufweisen, die dazu geeignet sind, dass die Befestigungsschlingen durch diese Durchführöffnungen hindurchführbar sind, insbesondere auf die dem Montageflansch zugewandte Seite der Abdeckplane.

Zusätzlich kann die Abdeckvorrichtung Abspanngurte aufweisen, um das Stützelement an dem Montageflansch, an der Mantelfläche, an der (Turm-) Wand oder der Arbeitsplattform zu verspannen.

Es kann vorgesehen sein, dass die Befestigungsschlingen kreis- oder ringförmig passend zur Anordnung der Montagelöcher des Montageflanschs angeordnet sind. Insbesondere kann vorgesehen sein, dass die Befestigungsschlingen zur Verwendung an unterschiedlichen Montageflanschen in mehreren konzentrisch mit radialem Abstand verlaufenden Anordnungen positioniert sind.

Die Abdeckplane kann an einem ersten Planenabschnitt eine oder mehrere Anordnung(en) von kreis- oder ringartig positionierten Befestigungsschlingen und an einem zweiten Planenabschnitt eine oder mehrere Anordnung(en) von kreis- oder ringartig positionierten Befestigungsschlingen aufweisen.

Der zweite Planenabschnitt kann kreisring- oder ringartig ausgebildet sein und innerhalb oder außerhalb des ersten Planenabschnitts an der Abeckplane befestigt sein.

Zweckmäßigerweise kann vorgesehen sein, dass eine, mehrere oder alle Befestigungsschlinge(n) in ihrer Länge einstellbar oder verstellbar ist (sind).

Ein Verfahren zum Herstellen einer Abdeckvorrichtung kann zumindest die folgenden Schritte umfassen:
Bereitstellen von Planensegmenten, die eine Form aufweisen, sodass ein aus den Planensegmenten in einer ebenen Fläche zusammengelegter Kreis sich außen erweiternde Spalte aufweist;
Verbinden von jeweils einem Planensegment mit zwei weiteren angrenzenden Planensegmenten zu der Abdeckplane;
umlaufendes An-/Einbringen von Durchführöffnungen in/an die/der Abdeckplane und
Bereitstellen des Stützelements zum Spannen der Plane.

Dabei ist die Reihenfolge der Schritte beliebig, solange die Reihenfolge nicht technisch zwingend notwendig ist.

Im Folgenden werden verschiedene Ausführungsformen der erfindungsgemäßen Abdeckvorrichtung anhand von Zeichnungen näher erläutert. Dabei zeigt
Fig. 1 eine schematische Ansicht eines Querschnitts eines Ausschnitts einer erfindungsgemäßen Abdeckvorrichtung,
Fig. 2 eine weitere schematische Ansicht eines Querschnitts einer erfindungsgemäßen Abdeckvorrichtung,
Fig.3 eine schematische Darstellung von Befestigungsschlingen einer erfindungsgemäßen Abdeckvorrichtung,
Fig. 4a eine Seitenansicht einer erfindungsgemäßen Abdeckvorrichtung,
Fig. 4b eine Draufsicht der Abdeckvorrichtung aus Fig. 4a,
Fig. 5a eine Seitenansicht einer erfindungsgemäßen Abdeckvorrichtung,
Fig. 5b eine weitere Seitenansicht der Abdeckvorrichtung aus Fig. 5a,
Fig. 5c eine Draufsicht der Abdeckvorrichtung aus Fig. 5a,
Fig. 6 Planensegmente einer erfindungsgemäßen Abdeckvorrichtung,
Fig. 7 ein weiteres Ausführungsbeispiel, und
Fig. 8-10 eine Variante der Abdeckvorrichtung.

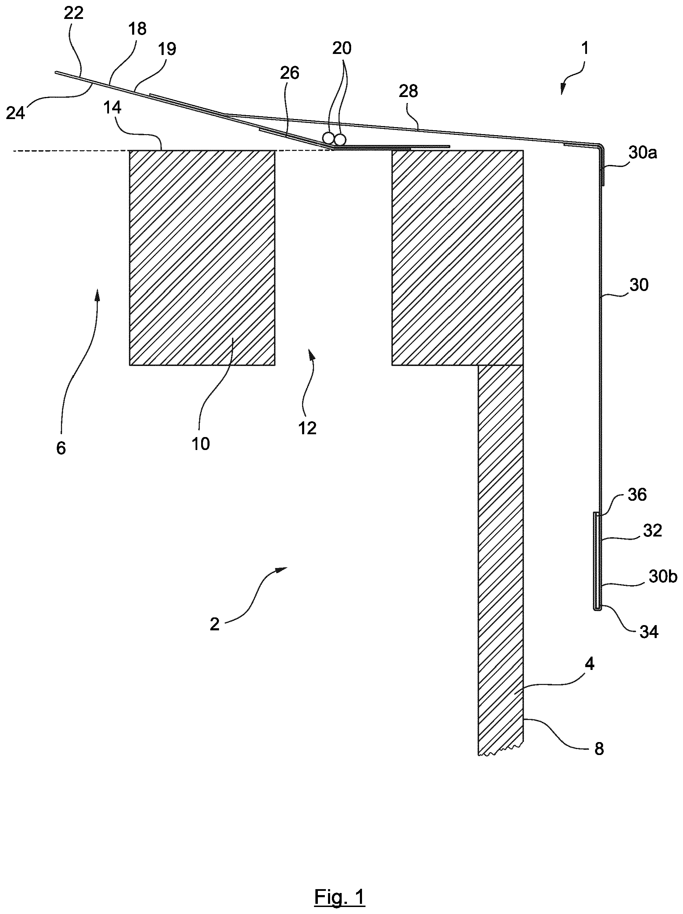

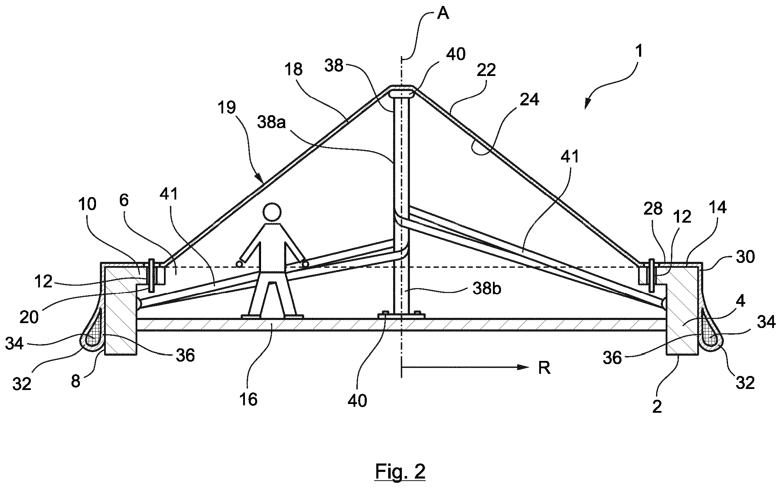

Fig. 1 und Fig. 2 zeigen eine Querschnittsansicht einer erfindungsgemäßen Abdeckvorrichtung 1 in einem montierten Zustand auf einem Turmsegment 2.

Ein Turmsegment 2 ist Teil einer Windenergieanlage und weist im Wesentlichen die Form eines Zylinders auf. Eine Turmwand 4 umschließt eine stirnseitige Öffnung 6 zu einem tunnelförmigen Innenraum des Turmsegments 2, der sich entlang einer Längsachse A erstreckt, und bildet eine außenliegende Mantelfläche 8 des Turmsegments 2. Von der Turmwand 4 aus erstreckt sich ein Montageflansch 10 entlang einer radialen Richtung R nach innen, also zur Mitte des Turmsegments 2. Der Flansch 10 weist Montagelöcher 12 auf, die bevorzugt äquidistant zueinander entlang des einer Umfangsrichtung verteilt sind.

Der Montageflansch 10 kann dazu dienen, ein weiteres Turmsegment, eine Gondel oder andere Elemente der Windenergieanlage an dem Turmsegment 2 zu befestigen.

Der Montageflansch 10 schließt dabei im Wesentlichen bündig an einer stirnseitigen Fläche 14 der Turmwand ab. In dem Innenraum des Turmsegments 2 ist eine Arbeitsplattform 16 vorgesehen. Diese kann zum Beispiel durch eine in der Arbeitsplattform 16 vorgesehene Aufstiegsluke betreten oder verlassen werden.

Wird die Windkraftanlage montiert, kann es notwendig sein, die stirnseitige Öffnung 6 des Turmsegments 2 gegen Witterung abzudecken und zu verschließen. Gleichzeitig soll die Arbeitsplattform 16 weiterhin begehbar bleiben und Arbeiten von dort aus möglichen bleiben.

Dazu ist eine erfindungsgemäße Abdeckvorrichtung 1 auf dem Turmsegment 2 montiert. Die Abdeckvorrichtung 1 besteht aus einer Abdeckplane 18, die die stirnseitige Öffnung 6 des Turmsegments 2 überspannt. Abdeckplane 18 ist dabei an dem Montageflansch 10 befestigt. Dazu weist die Abdeckplane 18 eine Hauptplane 19 auf, die die Öffnung 6 überspannt und an dem Montageflansch 10 befestigt ist. Dazu sind Befestigungsschlingen 20 an der Hauptplane 19 befestigt.

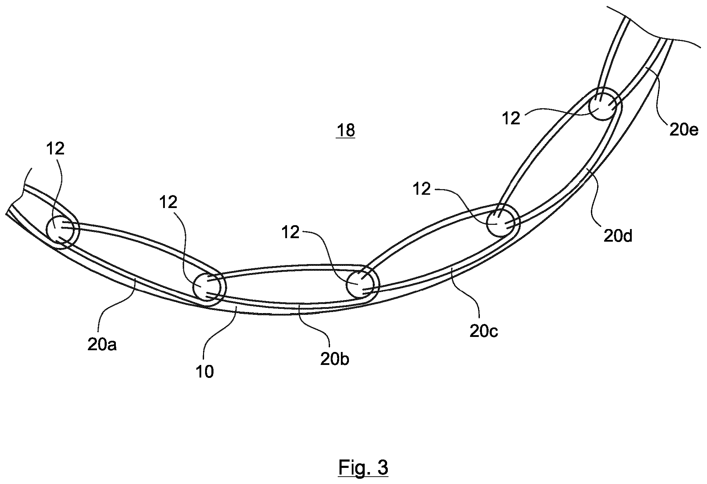

Die Befestigungsschlingen 20 sind in einer kreisförmigen Anordnung so auf der Hauptplane 18 angeordnet, dass jede Befestigungsschlinge 20 von oben nach unten durch je ein Montageloch 12 des Montageflansches 10 führbar ist, wie in Fig. 3 dargestellt. So können die Befestigungsschlingen 20 a bis e auf einer Unterseite des Montageflansches 10 zu einer Kette miteinander verknüpft werden. Dazu wird jede Befestigungsschlinge 20 durch eine angrenzende Befestigungsschlinge 20 a bis e geführt, bevor die auf der anderen Seite angrenzende Befestigungsschlinge 20 a bis e durch die Befestigungsschlinge 20 a bis e hindurchgeführt wird. Zum Beispiel wird die Befestigungsschlinge 20b durch die Befestigungsschlinge 20a geführt, anschließend die Befestigungsschlinge 20c durch die Befestigungsschlinge 20b, die Befestigungsschlinge 20d durch die Befestigungsschlinge 20c und die Befestigungsschlinge 20e durch die Befestigungsschlinge 20d. Die letzte Befestigungsschlinge (hier nicht dargestellt) kann anderweitig befestigt werden. Zum Beispiel kann sie mit der ersten Befestigungsschlinge verknotet werden oder mittels eines Endbefestigungselements, zum Beispiel einem Karabinerhaken, an dem Montageflansch oder der ersten Befestigungsschlinge befestigt werden.

Die Befestigungsschlingen 20 sind dabei auf einer oberen Seite, also einer turmabgewandten Seite 22 der Hauptplane 19 der Abdeckplane 18 an dieser befestigt, zum Beispiel vernäht, verklebt, verschweißt oder verknotet. Die Hauptplane 19 weist Ösen als Durchführöffnungen auf, durch die die Befestigungsschlingen 20 auf die Unterseite, also die turmzugewandte Seite 24 der Abdeckplane 18 führbar sind, um durch die Montagelöcher 12 geführt werden zu können.

Die Befestigungsschlingen 20 können aus Seilstücken hergestellt sein, die mit beiden Enden an Abdeckplane befestigt sind. In einem Bereich in dem die Befestigungsschlingen 20 und/oder der Ösen an der Abdeckplane 18 angeordnet sind, kann die Abdeckplane 18 verstärkt sein, um ein Reißen oder Ausfransen der Abdeckplane 18 zu verhindern. Dazu können Metallringe an den Rändern der Ösen vorgesehen sein oder Verstärkungsstreifen 26 vorgesehen sein. Ein solcher Verstärkungsstreifen 26 ist bevorzugt umlaufend ringförmig und erstreckt sich in der radialen Richtung zumindest von einem innersten Punkt bis zu einem äußersten Punkt der Ösen oder der Befestigung der Befestigungsschlingen 20. In der dargestellten, bevorzugten Ausführungsform erstreckt sich der Verstärkungsstreifen 26 in der radialen Richtung R zumindest von einem innersten Punkt zu einem äußersten Punkt der Montagelöcher 12.

Durch die Befestigung der Befestigungsschlingen 20 auf der turmabgewandten Seite 22 der Abdeckplane wird ein flächiges Andrücken der Abdeckplane 18 an die stirnseitige Fläche 14 der Turmwand 4 ermöglicht. Gleichzeitig werden die Befestigungen der Befestigungsschlingen 20 an der Abdeckplane 18, zum Beispiel die Nähte, geschont.

Die Befestigungsschlingen 20 sind somit mindestens so lang, dass sie durch die Montagelöcher 12 führbar sind und die verbleibende Länge dem Abstand zwischen zwei benachbarten Montagelöchern 12 entspricht. Alternativ können die Befestigungsschlingen 20 auch nur durch jedes zweite oder dritte Montageloch 12 oder in unregelmäßigen Abständen geführt sein und entsprechend länger ausgeführt sein.

Um ein Eindringen von Wasser in das Turmsegment 2, zum Beispiel durch die Ösen, zu verhindern, ist ein ringförmiger Abdeckstreifen 28 auf der turmabgewandten Seite 24 der Abdeckplane 18 vorgesehen.

Ein solcher Abdeckstreifen 28 ist bevorzugt umlaufend ringförmig und erstreckt sich in der radialen Richtung R zumindest von einem innersten Punkt bis zu einem äußersten Punkt der Ösen oder der Befestigung der Befestigungsschlingen 20. In der dargestellten, bevorzugten Ausführungsform erstreckt sich der Verstärkungsstreifen 28 in der radialen Richtung R zumindest von einem Punkt innerhalb des innersten Punktes der Montagelöcher 12 zu einem Punkt außerhalb der außenliegenden Mantelfläche 8 des Turmsegments 2. Im dargestellten Ausführungsbeispiel ist der Abdeckstreifen 28 lediglich mit dem in der radialen Richtung R innenliegenden Ende an der Hauptplane 19 befestigt, zum Beispiel verschweißt, verklebt oder vernäht. Alternativ kann auch das in der radialen Richtung R außenliegende Ende an der Hauptplane 19 befestigt oder lösbar befestigbar sein, zum Beispiel mittels Kletterverschlüssen.

An dem in der radialen Richtung R außenliegenden Ende des Abdeckstreifens 28 ist eine Schürze 30 befestigt, zum Beispiel angenäht, angeschweißt oder angeklebt. Die Schürze 30 erstreckt sich entlang der außenliegenden Mantelfläche 8 des Turmsegments 2. An einem unteren, zweiten Ende der Schürze 30b, das einem ersten, an dem Abdeckstreifen 28 befestigten Ende 30a gegenüberliegt, ist die Schürze 30 umgeschlagen, um eine Aufnahmetasche 32 für einen Spanngurt 34 bereitzustellen. Der Spanngurt 34 ist in der Umfangsrichtung beweglich in der Aufnahmetasche 32 aufgenommen.

Mittels des Spanngurtes 34 kann die Schürze 30 gegen die Mantelfläche 8 des Turmsegments 2 gespannt werden. Dabei wird der Spanngurt 34 über ein Spannmittel, zum Beispiel über eine Ratsche, in seiner wirksamen Länge verkürzt, um einen umgeschlagenen Abschnitt der Schürze 30 gegen die Mantelfläche 8 des Turmsegments 2 zu drücken.

Der Spanngurt 34 kann mehrere Spannmittel aufweisen, die bevorzugt äquidistant entlang der Umfangsrichtung verteilt sind. Die Spannmittel, zum Beispiel Ratschen, können jeweils zwei Gurtabschnitte des Spanngurtes 34 miteinander verbinden. Dies kann notwendig sein, da über eine einzige Ratsche nicht genügend Anpressdruck an die Mantelfläche 8 erzeugbar ist. Auch führt eine einzige Ratsche über den Umfang des Turmsegments 2 zu einer ungleichmäßigen Belastung des Spanngurts 34 entlang des Umfangs.

Für jede Ratsche kann eine Arbeitsöffnung in der Abdeckplane 18 vorgesehen sein. Die Arbeitsöffnungen 18 sind verschließbar. Dazu weisen die Arbeitsöffnungen 18 zumindest an einer Seite, bevorzugt an zwei Seiten ein lösbares Verbindungsmittel, wie einen Reißverschluss, einen Klettverschluss oder eine Knopfleiste auf. Ein die Arbeitsöffnung abdeckender Abschnitt der Abdeckplane 18 ist bei geöffnetem Verbindungsmittel zum Öffnen der Arbeitsöffnung aufrollbar oder auf andere Weise aus der Arbeitsöffnung bewegbar und dort fixierbar.

Bevorzugt sind die Arbeitsöffnungen und die Spannmittel des Spanngurtes 34 so positioniert, dass ein Arbeiter, der auf der Arbeitsplattform 16 steht, durch die Arbeitsöffnungen mittels der Spannmittel den Spanngurt 34 spannen kann.

Die Schürze 30 weist auf der turmzugewandten Seite 24 eine Kontaktfläche auf, die mit dem Turmsegment 2 in Kontakt steht. Die Kontaktfläche weist einen hohen Reibungskoeffizienten auf. Dazu kann die Kontaktfläche durch die Schürze 30 ausgebildet sein, eine Beschichtung oder ein ringförmiger Haftstreifen sein oder aus mehreren Haftelementen bestehen, die über den Umfang des Turmsegments auf der Schürze verteilt sind. Zum Beispiel kann die Haftung beziehungsweise der Reibungskoeffizient durch eine Gummierung und/oder eine strukturierte Oberfläche erhöht werden. Dazu kann der Haftstreifen aus Ethylen-Propylen-Dien-Kautschuk (EPDM) bestehen.

Ein Bereich der Abdeckvorrichtung 1, der in dem montierten Zustand mit einer Ecke des Turmsegments 2, an der die außenliegende Mantelfläche 8 in die stirnseitige Fläche 14 übergeht, in Kontakt kommt, kann verstärkt sein. Im dargestellten Ausführungsbeispiel ist der Bereich auf der Ecke dadurch verstärkt, dass die Schürze 30 und der Abdeckstreifen 28 in diesem Bereich überlappend miteinander verbunden sind. Alternativ oder zusätzlich kann dieser Bereich durch einen zusätzlichen Materialstreifen verstärkt werden.

Bevorzugt sind die Hauptplane 19, der Abdeckstreifen 28 und die Schürze 30 aus dem gleichen Material, zum Beispiel aus PVC hergestellt. Verstärkungsstreifen, oder Streifen zur Erhöhung des Reibungskoeffizienten können aus einem anderen Material mit einem hohen Abriebwiderstand und/oder einem hohen Haftreibungskoeffizienten hergestellt sein, zum Beispiel aus Gummi, insbesondere aus EPDM. Ein Dichtungsring aus EPDM kann insbesondere auch zwischen der stirnseitigen Fläche 14 des Turmsegments 2 und der Abdeckplane 18 vorgesehen sein.

In alternativen Ausführungsformen kann die Schürze 30 einstückig mit der Hauptplane 19 oder dem Abdeckstreifen 28 ausgeführt sein.

In Fig. 1 sind der Abdeckstreifen 28 und die Schürze 30 nicht in ihrer eigentlichen Position in dem Montagezustand, also anliegend an das Turmsegment 2, dargestellt, sondern etwas beabstandet davon. Dies dient lediglich der verbesserten Darstellbarkeit der einzelnen Komponenten.

Bei gängigen Turmsegmenten 2 ragt die Turmwand 4 entlang der Längsachse A des Turmsegments 2 nur soweit über die Arbeitsplattform 16 heraus, dass ein Arbeiten auf der Arbeitsplattform 16 möglich ist, wenn eine ebene Abdeckvorrichtung montiert ist. Daher wird die Abdeckplane 18 der Abdeckvorrichtung 1 von dem Turmsegment 2 beziehungsweise der Arbeitsplattform 16 weggespannt.

Dies kann ähnlich wie bei einem klassischen First- oder Pyramidenzelt geschehen. Dazu wird/werden ein oder mehrere senkrechte/-s Stützelement/-e 38 auf der Arbeitsplattform 16 positioniert und spannen die Abdeckplane 18 von der Arbeitsplattform 16 weg. So entsteht ein höherer Arbeitsraum, in dem sich die Arbeiter bewegen können. Die Stützelemente 38 bestehen aus mehrere Säulenelementen 38a, 38b, die entlang ihrer Längsachsen zueinander beweglich sind, um die Länge des Stützelements 38 einzustellen. Die beiden Säulenelemente 38a, 38b können zum Beispiel über ein Gewinde miteinander verbunden sein, sodass durch ein relatives Drehen der beiden Säulenelemente 38a, 38b gegeneinander die Länge des Stützelements 38 variiert wird.

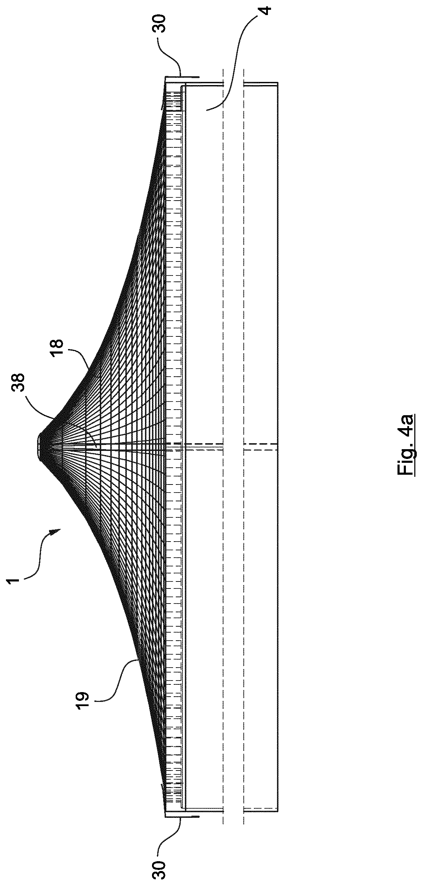

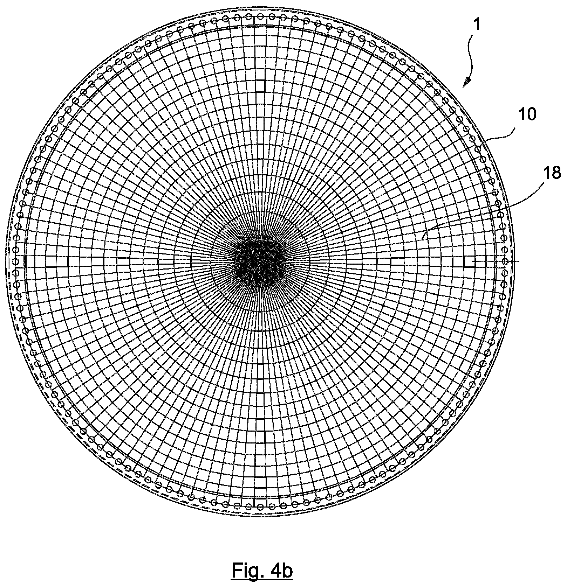

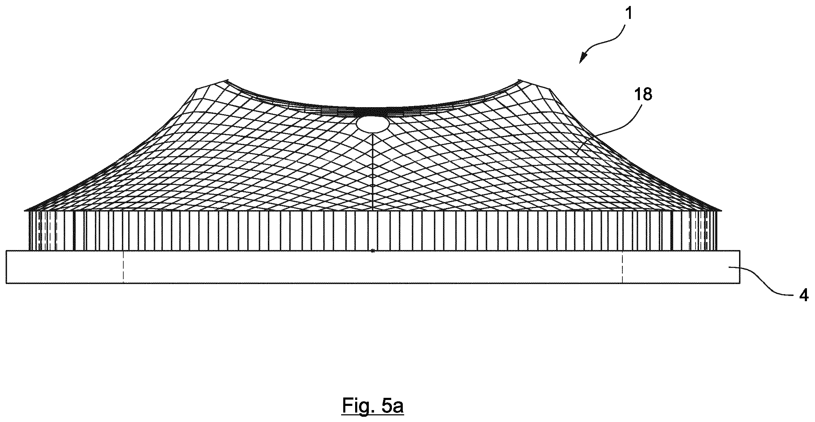

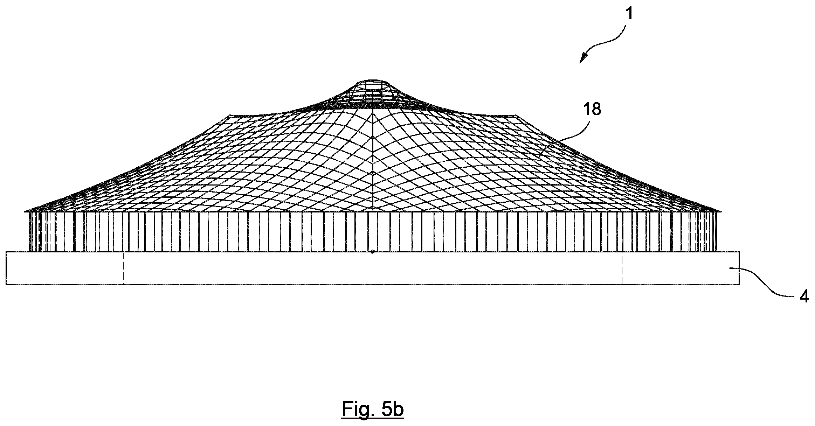

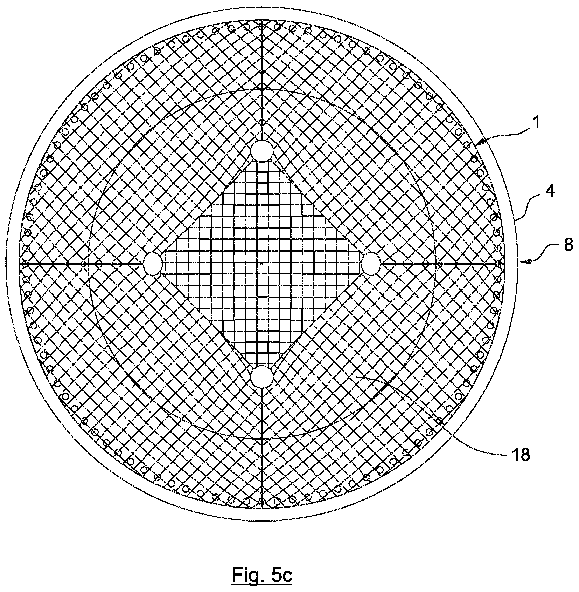

Wird ein einzelnes Stützelement 38 verwendet, wie in Fig. 4a und Fig. 4b dargestellt, ist dieses in der radialen Richtung R bevorzugt zentral in dem Turmsegment 2 angeordnet. Werden zwei Stützelemente verwendet, liegen diese bevorzugt auf einer durch den Mittelpunkt des Turmsegments verlaufenden Linie. Bei drei Stützelementen sind diese bevorzugt äquidistant in einem Dreieck aufgestellt. Die Fig. 5a bis 5c zeigen eine Abdeckvorrichtung 1 mit vier Stützelementen, von denen zwei Stützelemente höher sind als die anderen beiden Stützelemente. Die Stützelemente gleicher Höhe liegen dabei jeweils auf einer durch den Mittelpunkt des Turmsegments verlaufenden Linie.

An der Abdeckplane 18 und/oder der Arbeitsplattform 16 ist ein Halteelement 40 befestigt, um das Stützelement 38 in der gewünschten Position zu halten. Dies kann zum Beispiel eine Flanschverschraubung, ein Klöpperboden oder eine Eingriffstasche sein. Insbesondere an der Arbeitsplattform 16 kann das Stützelement 38 alternativ auch durch einen einfachen Standfuß verspannt sein.

Alternativ oder zusätzlich kann eine Verstärkung je Stützelement 38 an der Abdeckplane 18 vorgesehen sein. Die Verstärkung kann eine Gummierung sein, die den Reibungskoeffizienten erhöht und somit ein Wegrutschen des Stützelements 38 verhindert.

Ferner kann das Stützelement 38 mittels Abspanngurten 41 an der Turmwand 4 oder der Arbeitsplattform 16 befestigt werden.

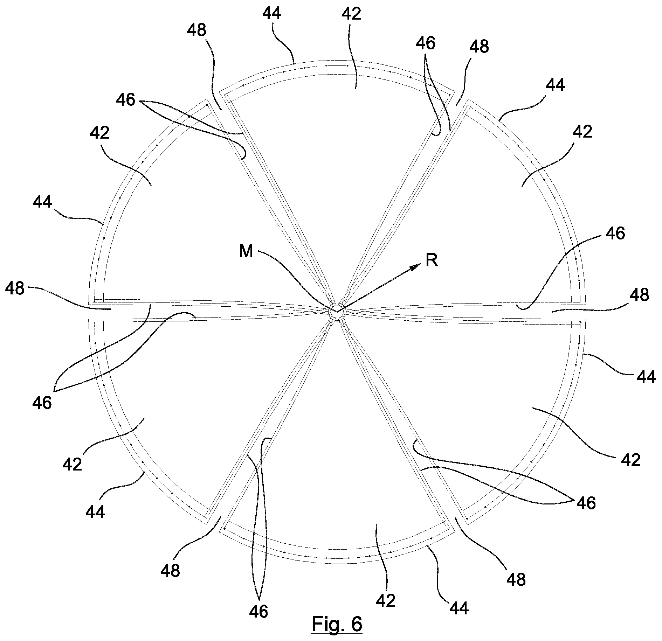

Fig. 6 zeigt eine Anordnung von Planensegmenten 42 einer Abdeckplane 18. Die Planensegmente 42 werden zur Herstellung der Abdeckplane 18 bevorzugt werksseitig miteinander verbunden, zum Beispiel vernäht, verschweißt oder verklebt.

Die Abdeckplane 18 ist insgesamt im Wesentlichen kreisförmig. Die einzelnen Planensegmente 42 sind Kreisabschnitte, die jeweils einen gleichen Kreiswinkelabschnitt überspannen. In alternativen Ausführungsformen können die Planensegmente 42 unterschiedlich groß sein. Zum Beispiel können Planensegmente 42, die eine Arbeitsöffnung aufweisen, größer sein als die übrigen Planensegmente 42.

Jedes Planensegment 42 hat im Wesentlichen die Form eines gleichschenkligen Dreiecks. Dabei ist die außenliegende Seitenkante des Dreiecks 44, die einen Teils einer Umfangskante der Abdeckplane bildet, abgerundet, so dass die Abdeckplane kreisförmig ist. Die beiden gleichen Schenkel/ Seitenkanten des Dreiecks 46, die sich zu einem Mittelpunkt M der Abdeckplane erstrecken und mit denen das Planensegment 42 an jeweils ein weiteres Planensegment 42 angrenzt, weisen jeweils eine Kontur auf, die ein faltenfreies Spannen der Abdeckplane 18 in Richtung der turmabgewandten Seite, also nach oben ermöglicht. Werden die Planensegmente 42 äquidistant in Form des späteren Kreises hingelegt, sodass sich deren Spitzen in dem Mittelpunkt M berühren, wie abgebildet, ergeben sich Spalte 48 zwischen den Planensegmenten 42, die sich in der radialen Richtung R nach außen verbreitern. Jeder ringförmige Abschnitt der Abdeckplane verringert seinen Umfang, wenn die Plane nach oben gespannt wird. Entsprechend entsteht überflüssiges Planenmaterial, das zu Faltenwurf führt, wenn das Ausgangsmaterial eine ebene kreisförmige Plane ist. Die Spalten 48, also die Konturen der gleichen Seitenkanten 46 der Planensegmente 42, entsprechen einem Entfernen des überflüssigen Planenmaterials, das bei einem nach oben Spannen der Abdeckplane 18 für den Faltenwurf sorgt.

Bevorzugt werden die Planensegmente 42 überlappend aneinander befestigt.

Handelt es sich um textile Planen, können die Planensegmente 42 so gefertigt und angeordnet werden, dass Schuss beziehungsweise Kette der Plane in dem überlappenden Bereich zweier Planensegmente 42 in den beiden Planensegmenten 42 verdreht zueinander, bevorzugt um 90° verdreht zueinander, angeordnet sind, sodass sich die Schüsse der beiden Planensegmente 42 und Ketten der beiden Planensegmente 42 jeweils kreuzen. Dies erhöht die Stabilität in den überlappenden Bereichen.

Alternativ oder zusätzlich können weitere Verstärkungsstreben vorgesehen sein, die von den Hochpunkten der Erhebungen radial nach außen verlaufen und die über das/die Stützelement/-e in die Plane eingebrachte Spannung nach außen in den Bereich übertragen, an dem die Abdeckvorrichtung mit dem Montageflansch befestigt ist.

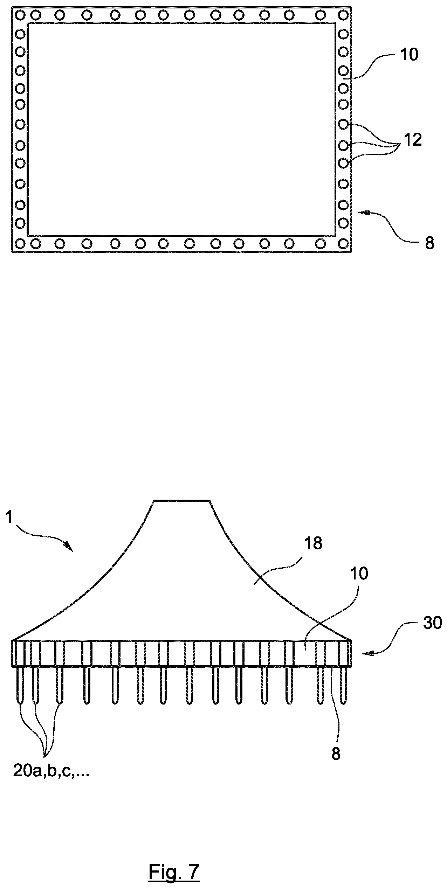

Figur 7, in der unterschiedliche schematische Ansichten dargestellt sind, erläutert eine weitere mögliche Ausführungsform der Erfindung, und zwar in Form einer Abdeckvorrichtung, die bspw. zum Abdecken von Gegenständen im Freien genutzt werden kann. Grundsätzlich umfasst die Ausführungsform im Wesentlichen lediglich einen Montageflansch sowie eine Mantelfläche zur Anbringung einer Abdeckplane gemäß der Erfindung. Der Montageflansch, der im oberen Teil von Fig. 7 schematisch in Draufsicht dargestellt ist, hat vorliegend eine quadratische Form oder Kontur, kann aber grundsätzlich jede beliebige Form aufweisen, bspw. polygonal (drei-, vier-, fünf- oder mehreckig), rund, oval oder frei geformt. Zweckmäßigerweise ist die Mantelfläche durch den Montageflansch selbst gebildet, d.h. der Montageflansch kann aus einem profilierten Trägermaterial gebildet sein, welches bspw. eine L- oder U-förmige Querschnittsform aufweist, oder auch eine quadratische oder rechteckige geschlossene Querschnittsform, mit einer die Mantelfläche bildenden Außenfläche.

Wie im unteren Teil von Fig. 7 schematisch dargestellt ist, ist die Abdeckplane so auf den Montageflansch aufgelegt, dass die Befestigungsschlingen jeweils durch die in dem Montageflansch vorgesehenen Montagelöcher verlaufen und unterhalb des Montageflanschs, an einer von der Abdeckplane abgewandten Seite, kettenartig miteinander verbunden sind, so dass die Abdeckplane fest an dem Montageflansch gehalten ist.

Eine nicht im einzelnen dargestellte Schürze der Abdeckplane verläuft entlang der Mantelfläche und kann, wie vorstehend im Zusammenhang mit den anderen Ausführungsformen beschrieben, mittels eines Spanngurts mit der Mantelfläche verspannt sein.

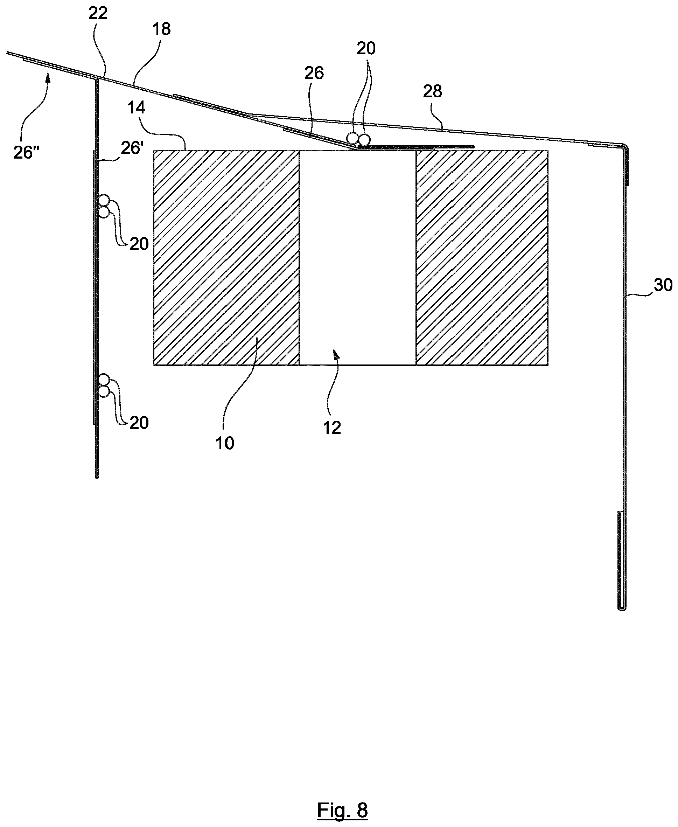

Figur 8 bis 10 erläutern eine weitere Ausführungsform der Erfindung, wobei Fig. 8 eine Ansicht ähnlich Fig. 1 zeigt, mit dem Unterschied, dass zusätzlich zu dem Verstärkungsstreifen 26 ein weiterer Verstärkungsstreifen 26' vorgesehen ist, der in einem radial weiter innenliegenden Bereich als der Verstärkungsstreifen 26 in einem Verbindungsbereich 26" mit der Abdeckplane 18 verbunden ist, bspw. durch Kleben, Nähen oder Schweißen. Der Verstärkungsstreifen 26' weist analog zu dem Verstärkungsstreifen 26 (Fig. 1) eine Anzahl von Befestigungsschlingen 20', 20" auf, die jeweils entlang einer Kreislinie umlaufend auf dem Verstärkungsstreifen 26' angeordnet sind. Allerdings sind die Befestigungsschlingen 20', 20" auf dem Verstärkungsstreifen 26' nicht entlang einer einzigen Kreislinie bzw. in einem einzigen festen Radius bezüglich eines Kreismittelpunkts angeordnet, sondern entlang mehrerer (hier zwei) paralleler, konzentrisch mit radialem Abstand verlaufenden Kreislinien, so dass ein und dieselbe Abdeckplane für Anwendungen mit Montagelöchern eines Montageflanschs verwendet werden kann, die sich auf unterschiedlichen Radien befinden. Fig. 8 zeigt an dem Verstärkungsstreifen 26' zwei Befestigungsschlingen 20', 20", deren unterschiedliche Anordnungsradien, die sich in einem auf den Montageflansch 10 hochgeklappten, mehr oder weniger horizontalen Zustand ergeben, zwei unterschiedlichen Radien bzw. zwei benachbarten Kreislinien von Anordnungen von Montagelöchern 12 entsprechen.

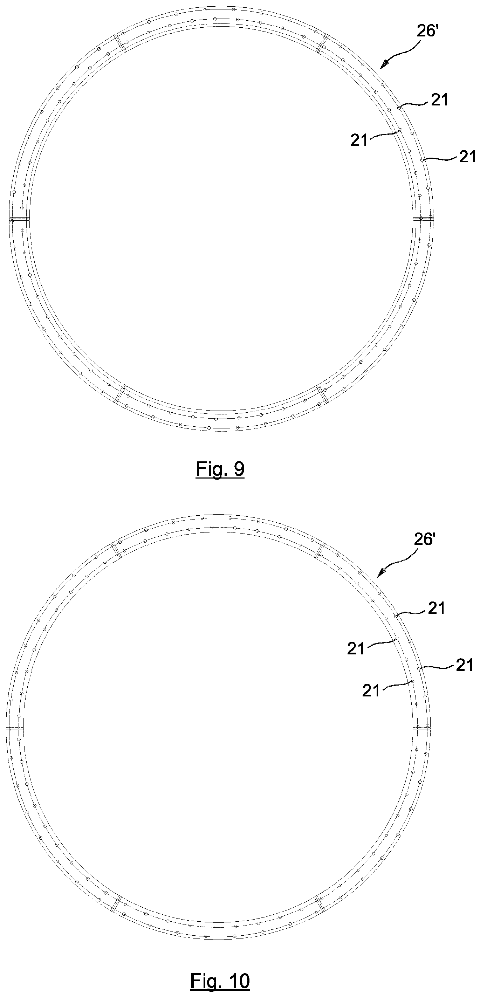

Fig. 9 und 10 erläutern in Draufsichten zwei beispielhafte Zuschnitte von Verstärkungsstreifen 26' mit zwei entlang konzentrischer Kreislinien angeordneten Reihen von Durchführöffnungen 21', 21" für Befestigungsschlingen 20', 20". Die Verstärkungsstreifen sind zweckmäßig ebenso wie die Abdeckplane 18 in Sektoren unterteilt, hier sechs mit Umfangswinkel 60°, angedeutet durch parallele Dreifachlinien.

### Bezugszeichenliste

- 1: Abdeckvorrichtung
- 2: Bausegment/ Turmsegment
- 4: Wand/ Turmwand
- 6: stirnseitige Öffnung
- 8: außenliegende Mantelfläche
- 10: Montageflansch
- 12: Montagelöcher
- 14: stirnseitige Fläche
- 16: Arbeitsplattform
- 18: Abdeckplane
- 19: Hauptplane
- 20, 20 a bis e: Befestigungsschlingen
- 20', 20": Befestigungsschlingen
- 21, 21', 21": Durchführöffnung
- 22: turmabgewandte Seite
- 24: turmzugewandte Seite
- 26, 26': Verstärkungsstreifen
- 26": Verbindungsbereich
- 28: Abdeckstreifen
- 30: Schürze
- 30a: erstes Ende der Schürze
- 30b: zweites Ende der Schürze
- 32: Aufnahmetasche
- 34: Spanngurt
- 36: umgeschlagener Abschnitt der Schürze
- 38: Stützelemente
- 38a, 38b: Säulenelement
- 40: Halteelement
- 41: Abspanngurte
- 42: Planensegmente
- 44: außenliegende Seitenkante des Planensegments
- 46: gleiche Seitenkanten des Planensegments
- 48: Spalt
- A: Längsachse
- R: radiale Richtung
- M: Mittelpunkt

## Patentansprüche

1. Abdeckvorrichtung für Bausegmente von Windkraftanlagen zum Abdecken eines in einer Ebene verlaufenden Montageflansches (10) und einer davon umschlossenen Fläche, wobei der Montageflansch (10) eine Mehrzahl von Montagelöchern aufweist, mit einer Abdeckplane (18), die auf eine Oberseite des Montageflansches auflegbar ist, und mit der dieser und die umschlossene Fläche abdeckbar ist,
einer Mehrzahl von Befestigungsschlingen (20, 20a bis 20e), die umlaufend an der Abdeckplane (18) angeordnet sind, um jeweils durch eines der Montagelöcher führbar zu sein und auf einer der Abdeckplane gegenüberliegenden Unterseite des Montageflansches (10) durch ein Hindurchführen jeweils eines Schlingenendes durch jeweils eine angrenzende Befestigungsschlinge (20, 20a bis 230e) zu einer Kette verbindbar zu sein,
und einer außerhalb der Montagelöcher (12) angeordneten, an die Abdeckplane (18) anschließenden, umlaufenden Schürze (30), die an eine den Montageflansch (10) umgebende äußere Mantelfläche (8) anlegbar ist,
**gekennzeichnet durch** einen mit der Schürze (30) zusammenwirkenden Spanngurt (34) zum Spannen der Schürze (30) gegen die Mantelfläche (8).

2. Abdeckvorrichtung nach Anspruch 1, **dadurch gekennzeichnet, dass** der Spanngurt (34) ein umlaufender Gurt ist, der in einer Aufnahmetasche (32) der Schürze (30) gehalten ist.

3. Abdeckvorrichtung nach einem der vorangehenden Ansprüche, **dadurch gekennzeichnet, dass** eine verschließbare Arbeitsöffnung in der Abdeckplane (18) vorgesehen ist.

4. Abdeckvorrichtung nach einem der vorangehenden Ansprüche, **dadurch gekennzeichnet, dass** die Abdeckvorrichtung (1) zumindest ein Stützelement (38) aufweist, das zwischen dem Montageflansch (10) oder Bausegment (2), bevorzugt zwischen einer Arbeitsplattform des Bausegments (2), und mindestens einem Auflagepunkt der Abdeckplane (18) verspannbar ist, um die Abdeckplane (18) von einer Ebene des Montageflanschs (10) weg zu spannen und mindestens einen Hochpunkt der Abdeckplane (18) zu erzeugen.

5. Abdeckvorrichtung nach Anspruch 4, **dadurch gekennzeichnet, dass** die Abdeckplane (18) Verstärkungen aufweist, um eine durch das Stützelement (38) in die Abdeckplane (18) eingebrachte Spannung von dem Auflagepunkt zu den Befestigungsschlingen (20, 20a bis 20e) zu leiten.

6. Abdeckvorrichtung nach Anspruch 5, **dadurch gekennzeichnet, dass** die Verstärkungen den verstärkten Bereich des Auflagepunktes, einen entlang der Befestigungsschlingen (20, 20a bis 2oe) umlaufenden Verstärkungsstreifen (26) und zwischen dem verstärkten Bereich des Auflagepunktes und dem umlaufenden Verstärkungsstreifen (26) verlaufende Verstärkungsstreifen umfasst.

7. Abdeckvorrichtung nach einem der vorhergehenden Ansprüche, **dadurch gekennzeichnet, dass** die Abdeckplane (18) eine Hauptplane (19) und einen Abdeckstreifen (28) umfasst, der innerhalb der Befestigungsschlingen (20, 20a bis 2oe) an der Hauptplane (19) umlaufend befestigt ist und sich in einem montierten Zustand auf einer von dem Montageflansch abgewandten Seite (22) über die Befestigungsschlingen (20, 20a bis 2oe) bis zu der Schürze (30) erstreckt.

8. Abdeckvorrichtung nach einem der vorhergehenden Ansprüche, **dadurch gekennzeichnet, dass** die Befestigungsschlingen (20, 20a bis 2oe) auf einer dem Montageflansch abgewandten Seite der Abdeckplane (18) befestigt sind und die Abdeckplane (18) Durchführöffnungen aufweist, die dazu geeignet sind, dass die Befestigungsschlingen (20, 20a bis 2oe) durch diese Durchführöffnungen hindurchführbar sind, insbesondere auf die dem Montageflansch zugewandte Seite (24) der Abdeckplane.

9. Abdeckvorrichtung nach einem der vorhergehenden Ansprüche, **dadurch gekennzeichnet, dass** die Befestigungsschlingen (20, 20a bis 20e) kreis- oder ringförmig passend zur Anordnung der Montagelöcher des Montageflanschs (10) angeordnet sind.

10. Abdeckvorrichtung nach einem der vorhergehenden Ansprüche, **dadurch gekennzeichnet, dass** die Befestigungsschlingen (20, 20a bis 20e) zur Verwendung an unterschiedlichen Montageflanschen in mehreren konzentrisch mit radialem Abstand
verlaufenden Anordnungen positioniert sind.

11. Abdeckvorrichtung nach Anspruch 10, **dadurch gekennzeichnet, dass** die Abdeckplane (18) an einem ersten Planenabschnitt eine oder mehrere Anordnung(en) von kreis- oder ringartig positionierten Befestigungsschlingen (20) und an einem zweiten Planenabschnitt eine oder mehrere Anordnung(en) von kreis- oder ringartig positionierten Befestigungsschlingen (20) aufweist.

12. Abdeckvorrichtung nach Anspruch 11, **dadurch gekennzeichnet, dass** der zweite Planenabschnitt kreisring- oder ringartig ausgebildet und innerhalb oder außerhalb des ersten Planenabschnitts an der Abdeckplane befestigt ist.

13. Abdeckvorrichtung nach einem der vorhergehenden Ansprüche, **dadurch gekennzeichnet, dass** eine, mehrere oder alle Befestigungsschlinge(n) (20) in ihrer Länge einstellbar oder verstellbar ist (sind).

## Claims

1. Covering device for construction segments of wind turbines for covering a mounting flange (10), which extends in a plane, and an area surrounded thereby, wherein the mounting flange (10) has a plurality of mounting holes, having a covering tarpaulin (18) which is able to be placed onto a top side of the mounting flange and by way of which the latter and the surrounded area are able to be covered,
having a plurality of fastening loops (20, 20a to 20e) which are arranged peripherally on the covering tarpaulin (18) in order to in each case be able to be passed through one of the mounting holes and be able to be connected on a bottom side, situated opposite the covering tarpaulin, of the mounting flange (10) to form a chain by in each case one loop end being passed through in each case one adjacent fastening loop (20, 20a to 230e),
and having a peripheral skirt (30) arranged outside the mounting holes (12) and adjoining the covering tarpaulin (18), which is able to be placed against an outer lateral surface (8) which surrounds the mounting flange (10),
**characterized by** a tensioning strap (34) which interacts with the skirt (30) and serves for bracing the skirt (30) against the lateral surface (8).

2. Covering device according to Claim 1, **characterized in that** the tensioning strap (34) is an encircling strap which is held in a receiving pocket (32) of the skirt (30).

3. Covering device according to either of the preceding claims, **characterized in that** a closable working opening is provided in the covering tarpaulin (18).

4. Covering device according to one of the preceding claims, **characterized in that** the covering device (1) has at least one support element (38) which is able to be braced between the mounting flange (10) or construction segment (2), preferably between a working platform of the construction segment (2), and at least one support point of the covering tarpaulin (18) in order to tension the covering tarpaulin (18) away from a plane of the mounting flange (10) and to create at least one high point of the covering tarpaulin (18).

5. Covering device according to Claim 4, **characterized in that** the covering tarpaulin (18) has reinforcements to transmit a tension introduced into the covering tarpaulin (18) by the support element (38) from the support point to the fastening loops (20, 20a to 20e).

6. Covering device according to Claim 5, **characterized in that** the reinforcements comprise the reinforced region of the support point, a reinforcement strip (26) encircling along the fastening loops (20, 20a to 20e) and reinforcement strips running between the reinforced region of the support point and the encircling reinforcement strip (26).

7. Covering device according to one of the preceding claims, **characterized in that** the covering tarpaulin (18) comprises a main tarpaulin (19) and a covering strip (28), which is fastened in an encircling manner to the main tarpaulin (19) within the fastening loops (20, 20a to 20e) and, in a mounted state, extends over the fastening loops (20, 20a to 20e) to the skirt (30) on a side (22) facing away from the mounting flange.

8. Covering device according to one of the preceding claims, **characterized in that** the fastening loops (20, 20a to 20e) are fastened on a side of the covering tarpaulin (18) that faces away from the mounting flange, and the covering tarpaulin (18) has passage openings which are suitable for allowing passage of the fastening loops (20, 20a to 20e) through said passage openings, in particular on that side (24) of the covering tarpaulin which faces towards the mounting flange.

9. Covering device according to one of the preceding claims, **characterized in that** the fastening loops (20, 20a to 20e) are arranged circularly or annularly according to the arrangement of the mounting holes of the mounting flange (10).

10. Covering device according to one of the preceding claims, **characterized in that** the fastening loops (20, 20a to 20e), for use on different mounting flanges, are positioned in multiple arrangements that extend concentrically with a radial spacing.

11. Covering device according to Claim 10, **characterized in that** the covering tarpaulin (18) has on a first tarpaulin portion one or more arrangement(s) of circularly or annularly positioned fastening loops (20) and has on a second tarpaulin portion one or more arrangement(s) of circularly or annularly positioned fastening loops (20).

12. Covering device according to Claim 11, **characterized in that** the second tarpaulin portion is of circular or annular form and is fastened to the covering tarpaulin within or outside the first tarpaulin portion.

13. Covering device according to one of the preceding claims, **characterized in that** one, multiple or all the fastening loop(s) (20) is (are) settable or adjustable in terms of its (their) length.

## Revendications

1. Dispositif de recouvrement pour des segments structurels d'éoliennes destiné à recouvrir une bride de montage (10) s'étendant dans un plan et une surface entourée par celle-ci, la bride de montage (10) comportant une multitude de trous de montage, avec une bâche de recouvrement (18), qui peut être placée sur un côté supérieur de la bride de montage, et avec laquelle celle-ci et la surface renfermée peuvent être recouvertes,
une multitude de boucles de fixation (20, 20a à 20e), qui sont disposées en périphérie sur la bâche de recouvrement (18) pour pouvoir être guidées chacune à travers un des trous de montage et pour pouvoir être reliées en une chaîne sur un côté inférieur de la bride de montage (10) faisant face à la bâche de recouvrement en guidant respectivement une extrémité de boucle à travers respectivement une boucle de fixation (20, 20a à 230e) adjacente,
et un tablier (30) périphérique disposé à l'extérieur des trous de montage (12), se raccordant à la bâche de recouvrement (18), qui peut être placé sur une surface enveloppante (8) extérieure entourant la bride de montage (10),
**caractérisé par** une sangle de serrage (34) coopérant avec le tablier (30), destinée à serrer le tablier (30) contre la surface enveloppante (8).

2. Dispositif de recouvrement selon la revendication 1, **caractérisé en ce que** la sangle de serrage (34) est une sangle périphérique, qui est maintenue dans une poche de réception (32) du tablier (30).

3. Dispositif de recouvrement selon l'une des revendications précédentes, **caractérisé en ce qu'**une ouverture de travail refermable est prévue dans la bâche de recouvrement (18).

4. Dispositif de recouvrement selon l'une des revendications précédentes, **caractérisé en ce que** le dispositif de recouvrement (1) présente au moins un élément d'appui (38), qui peut être assemblé par serrage entre la bride de montage (10) ou le segment structurel (2), de manière préférée entre une plateforme de travail du segment structurel (2), et au moins un point de support de la bâche de recouvrement (18) pour serrer la bâche de recouvrement (18) de manière à s'éloigner d'un plan de la bride de montage (10) et pour produire au moins un point haut de la bâche de recouvrement (18).

5. Dispositif de recouvrement selon la revendication 4, **caractérisé en ce que** la bâche de recouvrement (18) comporte des renforts pour acheminer une tension introduite dans la bâche de recouvrement (18) par l'élément d'appui (38) depuis le point de support aux boucles de fixation (20, 20a à 20e).

6. Dispositif de recouvrement selon la revendication 5, **caractérisé en ce que** les renforts comprennent la zone renforcée du point de support, une bande de renfort (26) s'étendant en périphérie le long des boucles de fixation (20, 20a à 20e) et des bandes de renfort s'étendant entre la zone renforcée du point de support et la bande de renfort (26) périphérique.

7. Dispositif de recouvrement selon l'une des revendications précédentes, **caractérisé en ce que** la bâche de recouvrement (18) comprend une bâche principale (19) et une bande de recouvrement (28), qui est fixée en périphérie sur la bâche principale (19) à l'intérieur des boucles de fixation (20, 20a à 20e) et qui s'étend, dans un état monté sur un côté (22) opposé à la bride de montage au-dessus des boucles de fixation (20, 20a à 20e) jusqu'au tablier (30).

8. Dispositif de recouvrement selon l'une des revendications précédentes, **caractérisé en ce que** les boucles de fixation (20, 20a à 20e) sont fixées sur un côté de la bâche de recouvrement (18) opposé à la bride de montage, et la bâche de recouvrement (18) comporte des ouvertures de passage, qui sont adaptées pour que les boucles de fixation (20, 20a à 20e) puissent être guidées à travers lesdites ouvertures de passage, en particulier sur le côté (24) de la bâche de recouvrement tourné vers la bride de montage.

9. Dispositif de recouvrement selon l'une des revendications précédentes, **caractérisé en ce que** les boucles de fixation (20, 20a à 20e) sont disposées en forme de cercle ou d'anneau de manière à s'adapter pour l'agencement des trous de montage de la bride de montage (10).

10. Dispositif de recouvrement selon l'une des revendications précédentes, **caractérisé en ce que** les boucles de fixation (20, 20a à 20e) sont positionnées selon plusieurs agencements s'étendant de manière concentrique à une distance radiale pour l'utilisation sur différentes brides de montage.

11. Dispositif de recouvrement selon la revendication 10, **caractérisé en ce que** la bâche de recouvrement (18) comporte un ou plusieurs agencement(s) de boucles de fixation (20) positionnées à la manière d'un cercle ou d'un anneau sur une première section plane et un ou plusieurs agencement(s) de boucles de fixation (20) positionnées à la manière d'un cercle ou d'un anneau sur une deuxième section plane.

12. Dispositif de recouvrement selon la revendication 11, **caractérisé en ce que** la deuxième section plane est réalisée à la manière d'un cercle ou d'un anneau et est fixée sur la bâche de recouvrement à l'extérieur de la première section plane.

13. Dispositif de recouvrement selon l'une des revendications précédentes, **caractérisé en ce qu'**une, plusieurs ou toutes les boucles de fixation (20) peuvent être réglées ou ajustées dans leur longueur.
